# EUROPEAN PATENT SPECIFICATION

(11) **EP 4 579 215 B1**
(45) Date of publication and mention of the grant of the patent: **03.06.2026**
(21) Application number: 24173101.7
(22) Date of filing: 29.04.2024
(51) Int. Cl.: G01N 21/77, G01N 15/14, G01N 21/64, G01N 21/75

(54) **CHIP-INTEGRATED LUMINESCENCE DETECTION FOR CHEMICAL, BIOLOGICAL OR BIOCHEMICAL SENSING**
CHIPINTEGRIERTE LUMINESZENZDETEKTION FÜR CHEMISCHE, BIOLOGISCHE ODER BIOCHEMISCHE MESSUNG
DÉTECTION DE LUMINESCENCE INTÉGRÉE À UNE PUCE POUR DÉTECTION CHIMIQUE, BIOLOGIQUE OU BIOCHIMIQUE

(30) Priority: 28.12.2023 EP 23220564
(43) Date of publication of application: 02.07.2025
(73) Proprietor: IHP GmbH - Leibniz Institute for High Performance/ Leibniz Institute for Innovative Microelectronics, 15236 Frankfurt (Oder) (DE)
(72) Inventor: Steglich, Patrick, 15236 Frankfurt (Oder) (DE); Paul, Martin, 15236 Frankfurt (Oder) (DE)
(74) Representative: Eisenführ Speiser

(56) References cited:
- US-A1- 2020 200 972
- STEGLICH P ET AL: "CMOS-Compatible Silicon Photonic Sensor for Refractive Index Sensing Using Local Back-Side Release", IEEE PHOTONICS TECHNOLOGY LETTERS, IEEE, USA, vol. 32, no. 19, 23 August 2020 (2020-08-23), pages 1241 - 1244, XP011807352, ISSN: 1041-1135, [retrieved on 20200902], DOI: 10.1109/LPT.2020.3019114
- PUUMALA L S ET AL: "Biofunctionalization of Multiplexed Silicon Photonic Biosensors", BIOSENSORS, vol. 13, no. 1, 29 December 2022 (2022-12-29), CH, pages 53, XP093214815, ISSN: 2079-6374, DOI: 10.3390/bios13010053
- AFZALIAN A AND FLANDRE D: "Physical Modeling and Design of Thin-Film SOI Lateral PIN Photodiodes", IEEE TRANSACTIONS ON ELECTRON DEVICES, vol. 52, no. 6, June 2005 (2005-06-01), USA, pages 1116 - 1122, XP093214924, ISSN: 0018-9383, DOI: 10.1109/TED.2005.848080
- JIAN LIU ET AL: "A Review on the Recent Progress of Silicon-on-Insulator-Based Photodetectors", PHYSICA STATUS SOLIDI. A: APPLICATIONS AND MATERIALS SCIENCE, WILEY - V C H VERLAG GMBH & CO. KGAA, DE, vol. 218, no. 14, 20 May 2021 (2021-05-20), pages n/a, XP072428073, ISSN: 1862-6300, DOI: 10.1002/PSSA.202000751
- LIN Y ET AL: "Monolithically integrated, broadband, high-efficiency silicon nitride-on-silicon waveguide photodetectors in a visible-light integrated photonics platform", NATURE COMMUNICATIONS, vol. 13, no. 1, 26 October 2022 (2022-10-26), UK, XP093214948, ISSN: 2041-1723, Retrieved from the Internet <URL:https://www.nature.com/articles/s41467-022-34100-3> [retrieved on 20241015], DOI: 10.1038/s41467-022-34100-3

## Description

The present invention is concerned with a sensor chip for detecting a presence of chemical, biochemical or biological particles to be sensed in an analyte fluid.

Chip-integrated photonic sensors are considered to have potential for a multitude of biochemical and biological sensing applications such as food analysis, virus detection, healthcare and environmental monitoring.

Chip-integrated photonic sensor are typically composed of either interferometers or resonators, realized in a silicon-based photonic integrated circuit (PIC). A PIC can be compared to an electronic integrated circuit. However, it uses photons instead of electrons to transport information. As opposed to electronic integrated circuits, which are typically constructed of transistor arrays, PICs employ components like optical waveguides and gratings to guide, separate, polarize, modulate, couple, and, ultimately, to generate and detect light. Photonic chip-integrated sensors are generally resistant to electromagnetic interference, exhibit a high sensitivity and a low detection limit, while providing a small footprint, and allow labeled as well as label-free sensing, and also multiplexing of several analytes at the same time. Furthermore, an integration into lab-on-a-chip systems is feasible.

The publication Alexander Hofmann et al.: Lock-In Pixel CMOS Image Sensor for Time-Resolved Fluorescence Readout of Lateral-Flow Assays; IEEE TRANSACTIONS ON BIOMEDICAL CIRCUITS AND SYSTEMS, VOL. 16, NO. 4, AUGUST 2022; describes a CMOS image sensor (CIS) based implemented in 0.18 µm CMOS technology that performs time-resolved fluorescence (TRF) measurements for filter-less readout of lateral-flow assay (LFA) test strips. The LFA test strips consist of a sample pad, a conjugate release pad, a nitrocellulose membrane, and an absorbent pad attached onto a backing card. The CIS contains a 256 × 128 lock-in pixel (LIP) sensor array. Each pixel has a size of 10 µm × 10 µm and includes a photodiode acting as signal transducer. To detect even small amounts of fluorescence light over a wide analyte concentration range, the LIP architecture blocks interfering light when fluorophores are excited and accumulates the emitted luminescence light to be measured over multiple cycles after excitation based of the intensity difference over time of fluorescence and luminescence.

The publication Patrick Steglich et al.: CMOS-Compatible Silicon Photonic Sensor for refractive Index Sensing using Local Back-Side Release; IEEE PHOTONICS TECHNOLOGY LETTERS, vol. 32, no. 19 (2020-08-23) describes employing a local back-side release of the photonic sensor, enabling a separation of the sensing area from the rest of the chip.The sensor is based on a micro-ring resonator and is fabricated on waferlevel using a CMOS technology.

According to a first aspect of the present invention as defined with appended independent claim 1, a sensor chip for detecting a presence of biochemical or biological particles to be sensed in an analyte fluid comprises
- a silicon-on-insulator substrate, herein SOI substrate, that has a front side and a back side and that comprises a silicon layer forming the front side, a base layer forming the back side and a buried oxide layer between the silicon layer and the base layer;
- at least one cavity extending from the back side through the base layer and through the buried oxide layer and exposing a back surface of the silicon layer;
- at least one monolithically integrated lateral photodiode that comprises a lateral layer sequence of active photodiode layers, which lateral layer sequence forms an integral part of the exposed back surface and as such defines a photosensor surface; and
- a functionalized coating that has at least one surface functionalization layer on the photosensor surface and either comprises a capturing agent or is configured to immobilize a capturing agent upon exposure of the surface functionalization layer to the capturing agent, for selectively capturing the particles to be sensed from an analyte fluid upon exposure of the functionalization layer to the analyte fluid.

The photodiode is sensitive to detect, upon capture of one or more of the particles to be sensed by the capturing agent, characteristic light emission or a characteristic change in light emission from the surface functionalization layer in response to supplied excitation energy. The emitted characteristic light has a wavelength that is indicative of the presence of the particle to be sensed, and the photodiode is configured to provide a photodiode output signal indicative thereof.

The present invention provides a sensor chip that allows implementing chemical, biochemical and biological particle sensing applications, which combine ease of use with a particularly high detection sensitivity. As such, the sensor chip of the present invention is particularly suited for affordable, high-volume, rapid test applications like water analysis, environmental monitoring, and or food diagnostics. The test can be performed directly at the point-of-need, providing a rapid or even real-time measurement result.

Examples of application cases include the detection of bacteria, viruses and proteins in liquid analyte fluids such as water, urine or blood. However, these fluids are given only for the sake of examples. Other analyte fluids may be used. The sensor chip also allows using a gaseous analyte fluid. Thus, the term fluid is used in the present application as a generic term to cover liquid as well as gaseous analytes.

The present specification uses the term "biochemical or biological particle" for portions of matter, in particular molecules, that participate in chemical processes within living organisms. Biochemical particles include for instance carbohydrates, lipids, proteins, and nucleic acids. Biological particles include microorganisms such as bacteria or virus.

The sensor chip of the present invention is compatible with industry-standard CMOS processing technologies. As such, it is scalable and particularly suited for low-cost mass production. Also, the sensor application can easily be co-integrated on chip with electronic evaluation and output circuitry.

The sensor chip has at least one cavity extending from the back side through the base layer and through the buried oxide layer of its SOI substrate, thus exposing a back surface of the silicon layer. It is this exposed back surface, where the sensor chip monolithically integrates a lateral photodiode with a lateral layer sequence of active photodiode layers. This lateral layer sequence of active photodiode layers thus forms an integral part of the exposed back surface and as such defines a photosensor surface with a functionalized coating that can be exposed to an analyte fluid comprising particles to be sensed. Thus, characteristic light that forms a desired signal allowing a detection and identification of the particles to be sensed is generated in closest proximity to the active photodiode layers of the lateral photodiode. This achieves a particularly high sensitivity of the sensor chip in performing its sensing application.

The functionalized coating has at least one surface functionalization layer provided on the photosensor surface formed by the lateral photodiode. The surface functionalization layer on the photosensor surface may comprise a capturing agent. A suitable capturing agent is to be selected depending on the particular sensing application case and is thus to be selected with a view to the particles to be sensed. For the sake of providing examples, the surface functionalization layer may comprise one or more of the following: binder molecules; binder antibodies; fragments of antibodies, for example Fab, Fab2, or scFv fragments; Immunglobulin-G (IgG); a molecularly imprinted polymer (MIP); a peptide; DNA; an aptamere; and/or an affinity protein, such as Protein A, Protein G, Avidin or any of its derivates.

In an alternative embodiment, the surface functionalization layer is initially provided without the capturing agent, but configured to immobilize the capturing agent upon exposure of the surface functionalization layer to it. The material of the functionalization layer is suitably selected for enabling an immobilization of the capturing agent upon exposure to it.

Notably, the present invention does not impose a specific sensitivity requirement on the photodiode. The above description of the photodiode is not to be understood as necessarily enabling the detection of characteristic light from only a single captured particle to be sensed. While this is desirable and may be achieved in embodiments employing a suitable type photodiode under suitable operating conditions, different embodiments disclosed further below have different photodiodes with different levels of sensitivity. Different types of photodiode have different detection thresholds for emitted characteristic light, which among other factors depends on the spectral sensitivity, operating parameters and noise characteristics of the photodiode under the given operating parameters, and on the wavelength and intensity of the characteristic light per particle to be sensed, and may also depend on optical background noise in a given application environment. A suitable detection sensitivity is to be selected based on a consideration of these parameters and in view of the needs of a particular sensing application case of the sensor chip.

As will be explained in the context of the description of embodiments of the sensor chip, the sensing solution of the present invention involving a detection of a characteristic light emission can be combined with other known forms of particle detection using other optical sensors such as interferometers or resonators, which can be realized on the same chip in a photonic integrated circuit (PIC). Such additional detectors may even be implemented in the same cavity. This way, complementary information can be gathered from the same analyte sample.

The following description thus turns to embodiments that include additional features for further improving the sensor chip in different aspects.

The photodiode of the sensor chip can be implemented in different ways. In one embodiment, the lateral layer sequence of active photodiode layer is a P-N layer sequence. To achieve a larger area for light absorption and thus an improved quantum efficiency of photo detection, a P-I-N layer sequence may be used. Here, P denotes a p-doped semiconductor layer, N denotes an n-doped semiconductor layer, and I denotes an intrinsically conductive semiconductor layer, for instance silicon or silicon-germanium. In an embodiment the photodiode is an avalanche photodiode (APD) or a lateral single-photon APD, which due to their built-in gain mechanism have a particularly high sensitivity for low-level signals of the characteristic light emission

The material of the photodiode is selected with a view of the wavelength (in other words, energy or frequency) of the characteristic light used for the detection of the particles to be sensed. The photodiode may be sensitive to detect the characteristic light that is emitted directly by the particles to be sensed. Silicon as a photodetector material has a broad spectral range of sensitivity in the near UV, visible spectral range and near infrared. It is generally sensitive in the spectral range between 200 nm and 1100 nm, with the highest sensitivity being in the wavelength range higher than 400 nm. As such, silicon is suited for a broad range of application cases. A shift of the sensitivity to even higher wavelengths in the near infrared may be achieved by using a silicon germanium alloy.

In an alternative (or in addition to the above) a more indirect method of particle sensing may be used in that (additional) characteristic light is detected that is emitted by label particles such as label molecules. The concept of label particles is per se known. They are also referred to as reporter particles. Label particles have specific chemical properties that can be used to achieve a physical or chemical bond of the label particles only to the particles that are to be sensed and that are captured at the surface functionalization layer. In this regard, it does not matter whether the particles to be detected have bonded to the label molecules before or after getting immobilized on the surface functionalization layer. Furthermore, label particles exhibit a particularly strong emission of characteristic light in response to suitable excitation, such as chemical or optical excitation, making their emission easier to detect than the light emission of many types of particles to be sensed.

A suitable label particle for a given sensing application is to be selected with a view to achieving a chemical match to the properties of a given particle to be sensed in the sensing application. Furthermore, given a selected label particle, the excitation energy used for the detection mechanism must be selected to match energy absorption characteristics of the label particle such that the absorbed excitation energy is effective in generating the desired characteristic light emission.

Exemplary label particles are oxidative enzymes that produce the characteristic light in the form of bioluminescence in response to chemical excitation. This applies in particular to the class of luciferases. The peak emission wavelength for luciferases varies depending on the type of luciferase and the substrate used. For example, the peak emission wavelength for firefly luciferase is 560nm. However, other luciferases have emission spectra covering other areas of the electromagnetic spectrum. For instance, the luciferase known under the tradename NanoLuc^{®} has a peak emission wavelength at 460 nm.

Finally, returning to the properties of the photodiode in this discussion, the material of the photodiode is to be selected to (also) match the emission spectrum of characteristic light emitted by the selected label particle in its bonded state with the particle to be sensed.

Label particles may also serve for improving detectability of direct characteristic light emitted by the particles to be sensed, in that the label particles may absorb the energy of the direct light and emit their own characteristic light in a wavelength range that meets a higher detector sensitivity. Thus, undetectable direct light emission may serve as a source of excitation energy for the emission of characteristic light to be detected. This may hold true for a shift to higher wavelength by fluorescence or phosphorescence or by a shift from higher to lower wavelengths by up-conversion.

Different forms of excitation energy may be used for generating the characteristic light emission from the surface functionalization layer or the liquid in the LBE formed cavity in operation of the sensor chip, as described in the following.

In some embodiments, chemical processes in the functionalized coating provide the required excitation energy. This is for instance the case in the case of NanoLuc^{®} luciferase as a label molecule with the addition of a chemiluminescence agent such as Furimazine.

In other embodiments, electrogenerated chemiluminescence may be used, wherein the required electrical energy may be provided via suitable electrode structures on chip.

In further embodiments, the sensor chip may further comprise a monolithically integrated excitation light emitter arranged to emit excitation light for providing the excitation energy to generate the characteristic light emission from the surface functionalization layer carrying the particles to be sensed. The light emitter may be integrated on the SOI substrate. Techniques for integrating light emitters in the visible and near infrared are per se known, even if an integration of light emitters in the visible spectrum with a high processing yield is still a challenging task, in particular if CMOS-compatible processing is a requirement, and may at present result in undesirably high processing cost. However, with further progress in processing technology, such disadvantages are likely to be overcome. An SOI wafer with pre-fabricated light emitter structures made for instance of III-V nitrides may be provided as an intermediate product for further processing, and suitably covered during the CMOS processing of the sensor chip in order to avoid contamination of the FEOL processing line with undesired chemical elements.

In an alternative embodiment, the sensor chip comprises a monolithically integrated waveguide structure that is arranged and configured to receive excitation light from an external excitation light emitter and to guide the excitation light towards the surface functionalization layer.

The sensor chip may further comprise a sealing substrate attached to the SOI substrate on its back side. The sealing substrate serves to protect the cavity from exposure to external chemical, electrical or optical impacts. The sealing substrate may for instance be made of a metallic, ceramic, or polymeric material, or of a fiber-polymer composite material. A particular example is a single-layer circuit board or a multilayer circuit board as used for carrying and electrically connecting chips in integrated circuit packages.

The sealing substrate preferably has a fluid access port that is in fluidic connection with the cavity through the sealing substrate, to allow supplying the analyte fluid to the cavity through the fluid access port and the sealing substrate. Microfluidic Channels may be formed to guide the analyte to the functionalized coating in the cavity, and for guiding any other fluids required for suitable preparation of the functionalized coating. The microfluidic channels may in particular extend along an interface between the SOI substrate and the sealing substrate.

In some embodiments that use an external light emitter for providing the excitation energy, the sealing substrate comprises the excitation light emitter for providing the excitation light to the surface functionalization layer through the sealing substrate. Since the sealing substrate may be applied to the SOI substrate after CMOS front-end processing, the integration of a light emitter on the sealing substrate can be implemented at a lower processing cost as an integration on the SOI chip.

In some variants, the sealing substrate may be made of a material that is transparent for the excitation light. This allows particularly simple ways of providing the excitation light to the surface functionalized layer. In some sub-variants, only sections of the sealing substrate are made of such a transparent material, for instance in the form of an integrated excitation window of a material that covers the cavity and is transparent for the excitation light. In other variants, the sealing substrate is made of a material that is opaque for the excitation light. Here, the sealing substrate suitably comprises an optical input port for receiving the excitation light supplied by an external light source that is external to the sensor chip. In all mentioned variants, the sealing substrate may comprise a light propagation structure such as a waveguide allowing propagation of the excitation light to the surface functionalization layer.

Further embodiments comprise the photodiode in addition to a second photonic sensor element. This allows increasing a dynamic range of the measurement, and in particular the reliability and accuracy of the measurement of the analyte fluid. A second photonic sensor element may for instance include
- an active-surface element arranged on the exposed back surface of the silicon layer in the cavity and having the functionalized coating; and
- a waveguide arranged in a photonic plane for guiding an optical input wave to the active-surface element and for guiding an optical output wave from the active-surface element to a photonic detector, which is configured to generate an output signal in response to receiving the optical output wave.

The second photonic sensor element may be configured to expose the optical input wave to particles to be sensed and captured by the functionalized coating on the active surface element, and to provide the resulting optical output wave with phase information indicative of an interaction between the optical input wave and the captured particles to be sensed; wherein
- the photonic detector is configured to extract the phase information from the optical output wave and to provide a photonic detector output signal indicative of the presence of captured particles to be sensed.

An example of a second photonic sensor element is a silicon photonic micro-ring resonator (MRR). Light coupled to the MRR from a straight waveguide via evanescence field coupling. The light is then circulating inside the ring if the resonance condition is fulfilled. In this case, resonance peaks appear in the optical spectrum if the wavelength of the light matches a whole number of times inside the optical length of the ring. The resonance condition is sensitive to changes in the effective refractive index of the ring. The evanescence field, which represents a portion of light that is penetrating inside the surrounding material of the functionalization coating, can interact with the analyte fluid. Thus, a weak perturbation to the evanescent field leads to a change of the effective refractive index and, consequently, to a change of the resonance condition. Particles to be senses that are bound on by the functionalized coating the surface induce a resonance shift. The sensing information, i.e. the resonance shift, can be quantitatively interrogated by measuring either the resonance peak shift or the intensity change at a certain wavelength. This approach can achieve a label-free detection of particles to be sensed.

According to a second aspect of the present invention as defined with appended independent claim 15, a method for operating a sensor chip according to the first aspect of the invention or one of its embodiments is provided. The method comprises:
- providing a sensor chip according to the first aspect of the invention or one of its embodiments;
- exposing the surface functionalization layer of the sensor chip that comprises immobilized binder molecules to an analyte fluid comprising particles to be sensed;
- supplying excitation energy to the functionalization layer;
- detecting characteristic light emitted from the surface functionalization layer in response to the supplied excitation energy, wherein the characteristic light has a wavelength that is indicative of the presence of the particle to be sensed.

The method of the second aspect shares the advantages of the sensor chip of the first aspect of the present invention. In the following, further embodiments of the invention will be described with reference to the enclosed drawings. In the drawings:
In the following, further embodiments will be described with reference to the drawings.
Fig. 1 is a schematic cross sectional view of an embodiment of a sensor chip for chip-Integrated luminescence detection for chemical, biological or biochemical sensing;
Fig. 2 is a schematic cross sectional view of another embodiment of a sensor chip for chip-Integrated luminescence detection for chemical, biological or biochemical sensing with a substrate that is transparent in the lateral region of the cavity;
Fig. 3 is a schematic cross sectional view of another embodiment of a sensor chip for chip-Integrated luminescence detection for chemical, biological or biochemical sensing with a substrate that is transparent for the excitation light;
Fig. 4 is a schematic cross sectional view of another embodiment of a sensor chip with a PCB-integrated light source;
Fig. 5 is an enlarged cross sectional view of an area of a sensor chip comprising a cavity in accordance with another embodiment of the present invention;
Fig. 6 is an enlarged cross sectional view of an area of a sensor chip comprising a cavity in accordance with another embodiment of the present invention;
Fig. 7 is an enlarged cross sectional view of an area of a sensor chip comprising a cavity in accordance with another embodiment of the present invention;
Fig. 8 is a schematic cross sectional view of another embodiment of a sensor chip for chip-Integrated luminescence detection for chemical, biological or biochemical sensing where the sensor chip is mounted on a printed circuit board (PCB); and
Figs. 9 to 12 are illustrations of a functionalized surface of the photodetector used for particle sensing with characteristic light emitted by label particles and expected sensor signals.

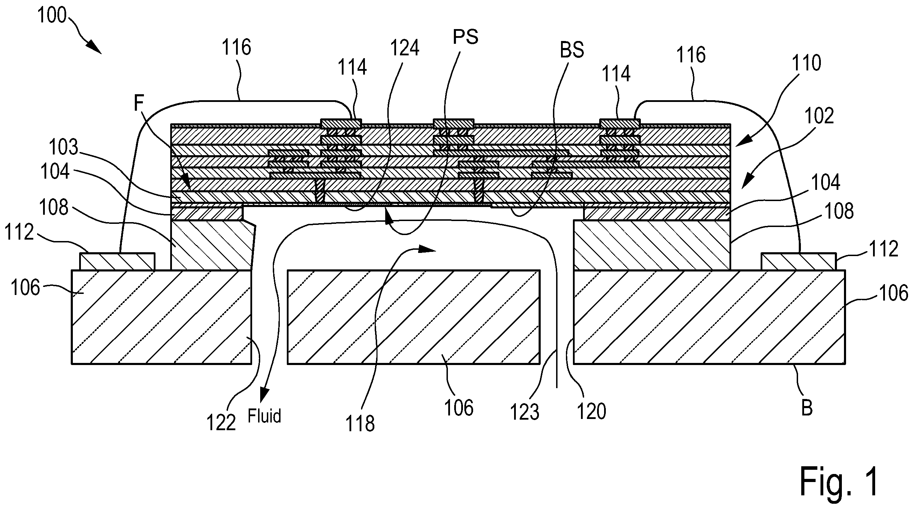

Fig. 1 is a schematic cross sectional view of an embodiment of a sensor chip 100 for chip-integrated luminescence detection for chemical, biological or biochemical sensing.

The sensor chip 100 has a silicon-on-insulator (SOI) substrate 102, that has a front side F and a back side B and that comprises a silicon layer 103 comprising the front side F and a buried oxide layer 104. A base layer 106 (also referred to as "substrate") comprises the back side B, and a substrate silicon layer 108 is arranged between the silicon layer 103 and the base layer 106. An interconnect stack 110 is provided on top of the silicon layer 103 and the buried oxide layer 104. Electrical contacts 112 are provided to the sides on the base layer 106 and are connected to metal structures 114 on a top metal layer of the interconnect stack 110 by wire bonds 116.

A cavity 118 extends from the back side B through the substrate 106, through the silicon layer 108 and through the buried oxide layer 104 and exposes a back surface BS of the silicon layer 103. The base layer 106 covers the cavity 118, but leaves openings 120, 122 for the conduction of fluid into and out of the cavity, as indicated by arrow 123.

A monolithically integrated lateral photodiode 124 comprises a lateral layer sequence of active photodiode layers, which lateral layer sequence forms an integral part of the exposed back surface BS and as such defines a photosensor surface.

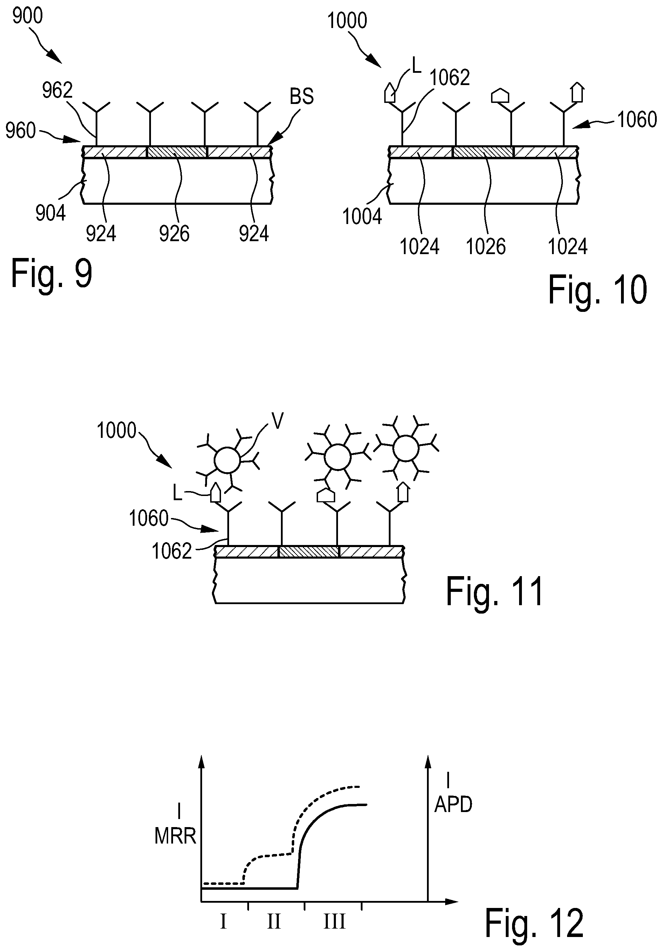

A functionalized coating (not visible in Fig. 1) that has at least one surface functionalization layer on the photosensor surface PS and either comprises a capturing agent or is configured to immobilize a capturing agent upon exposure of the surface functionalization layer to the capturing agent, for selectively capturing the particles to be sensed from an analyte fluid upon exposure of the functionalization layer to the analyte fluid. The design of the functionalized coating will be discussed below in the context of the description of Figs. 9 to 12.

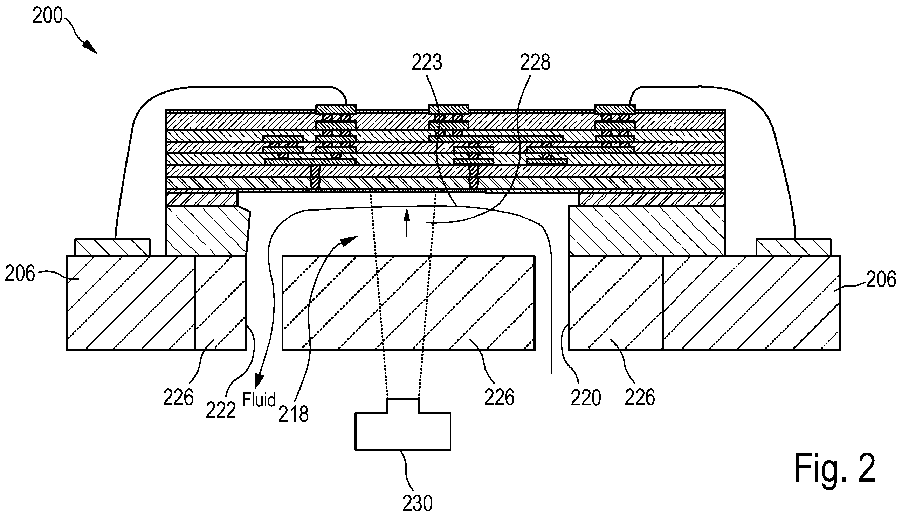

Fig. 2 is a schematic cross sectional view of another embodiment of a sensor chip 200 for chip-Integrated luminescence detection for chemical, biological or biochemical sensing. The sensor chip 200 is generally similar to the sensor chip 100 shown in Fig. 1, with the following difference. The sensor chip 200 has a substrate 206 with an excitation window region 226 that is transparent in the lateral region of the cavity 218, i.e. has an excitation window region 226 in the substrate 206. This allows providing excitation light 228 to the surface functionalized layer from an external light source 230, as shown. The material of the excitation window region 226 covers the cavity 218 and is transparent for the excitation light. The excitation window region 226 has openings 220, 222 for the conduction of fluid into and out of the cavity, as indicated by arrow 223. Otherwise, as mentioned, the sensor chip 200 is similar to that of Fig. 1.

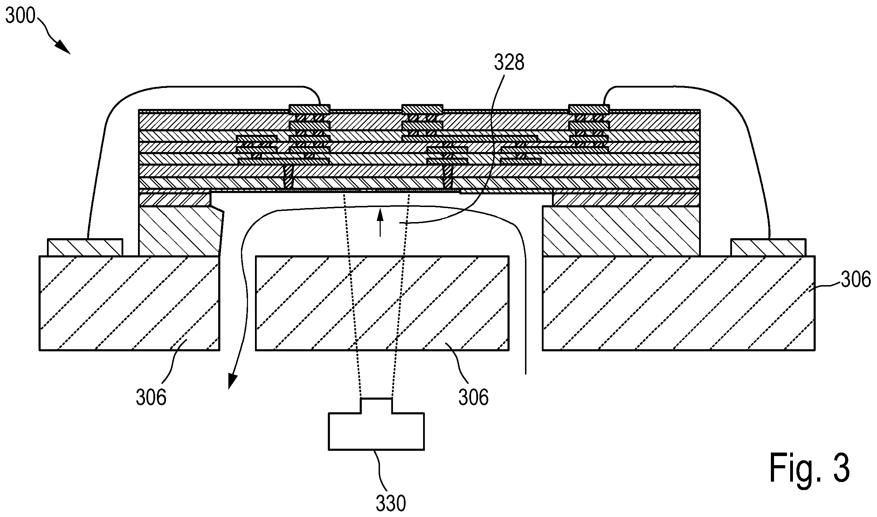

Fig. 3 is a schematic cross sectional view of another embodiment of a sensor chip 300 for chip-Integrated luminescence detection for chemical, biological or biochemical sensing. The sensor chip 200 is generally similar to the sensor chips 100 and 200 shown in Figs. 1 and 2, respectively, with the following difference. The sensor chip 300 has a substrate 306 that is transparent for the excitation light 328, for allowing transmission of excitation light from an external light source 330 to the surface functionalized layer, similarly as in the example of Fig. 2. However, in the present case it is the full substrate 306, which is transparent, and not only an excitation window region. Otherwise, as mentioned, the sensor chip 300 is also similar to those of Figs. 1 and 2.

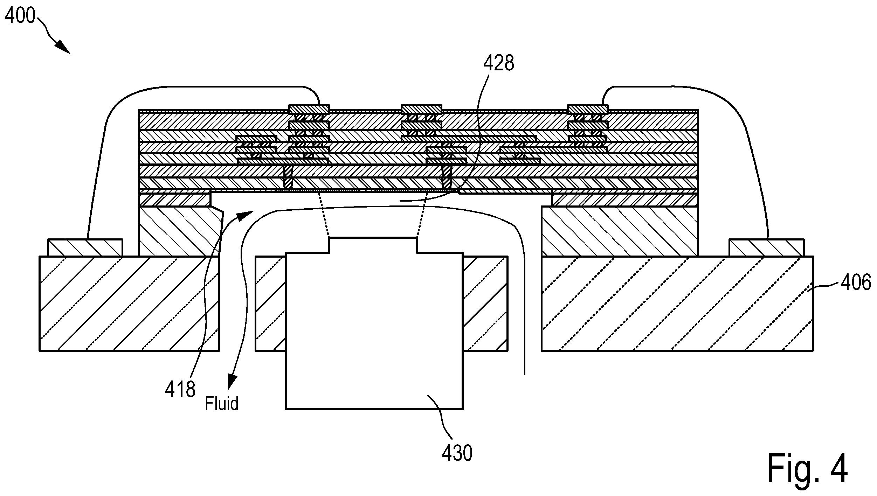

Fig. 4 is a schematic cross sectional view of another embodiment of a sensor chip 400 for chip-Integrated luminescence detection for chemical, biological or biochemical sensing with a substrate 406 that is solid and opaque for the excitation light 428. A light source 430 is integrated into the substrate for providing excitation light 428 to the functionalized photosensor surface from across the cavity 418. Otherwise the sensor chip 400 is similar to the sensor chip 100 of Fig. 1.

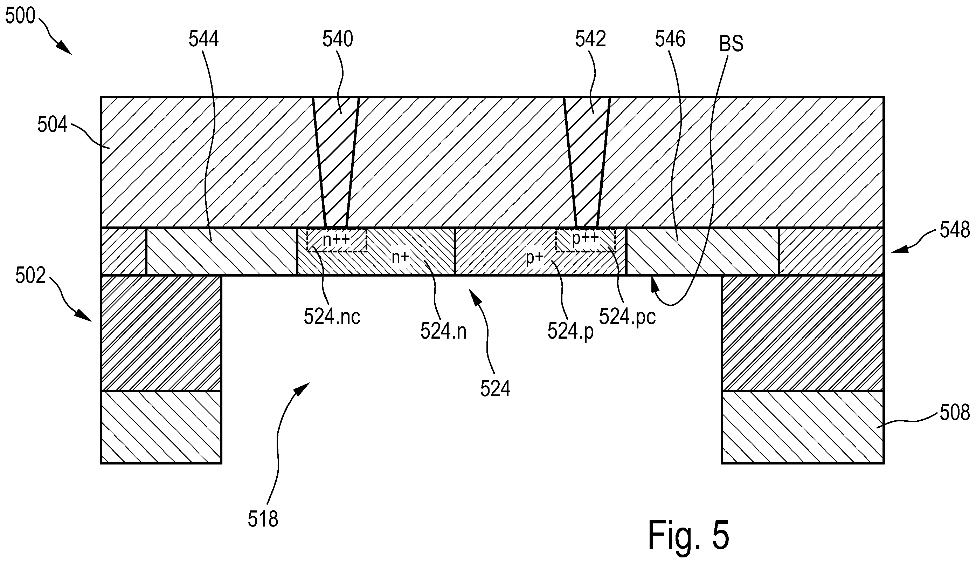

Fig. 5 is an enlarged cross sectional view of an area of a sensor chip 500 comprising a cavity 518 in accordance with another embodiment of the present invention. A monolithically integrated lateral photodiode 524, which is typically fabricated in a front-end-of-line processing phase, i.e., before the cavity is fabricated, comprises a lateral n⁺-p⁺-layer sequence of active photodiode layers 524.n and 524p, which lateral layer sequence forms an integral part of the exposed back surface BS and as such defines a photosensor surface. Exemplary ranges of suitable doping levels of the n⁺-p⁺-layer sequence are1x10¹⁸ cm⁻³ to 1x10¹⁸ cm⁻³for a silicon n⁺ layer 524.n and 5x10¹⁸ cm⁻³ for a silicon p⁺ layer of the lateral photodiode 524. Particularly high doping levels, for instance in the range of 1x 10²⁰ cm⁻³, are provided in a silicon n⁺⁺ contact region 524.nc in the n⁺ layer 524.n and in a silicon p⁺⁺ contact region 524.pc in the p⁺ layer 524.p. The contact regions 524.nc and 524.pc are contacted using respective conductive vias 540 and 542 extending vertically through the silicon layer 504 of the SOI substrate 502. Laterally, the integral lateral photodiode 524 is embedded between insulating material regions 544 and 546 fabricated as parts of a in a photonic plane 548 in front-end-of line processing.

Again, the functionalized surface disposed on the lateral photodiode 524 is not shown for reasons of simplicity of graphical illustration. For the same reason, Fig. 5 does not show the substrate layer below the buried oxide layer 508 of the SOI substrate 502. The underlying substrate layer can be designed according to any of the embodiments described in the context of the embodiments of Figs. 1 to 4. Thus, the embodiment of Fig. 5 can also be seen as an enlarged view of the sensor chips 100,200,300, and 400.

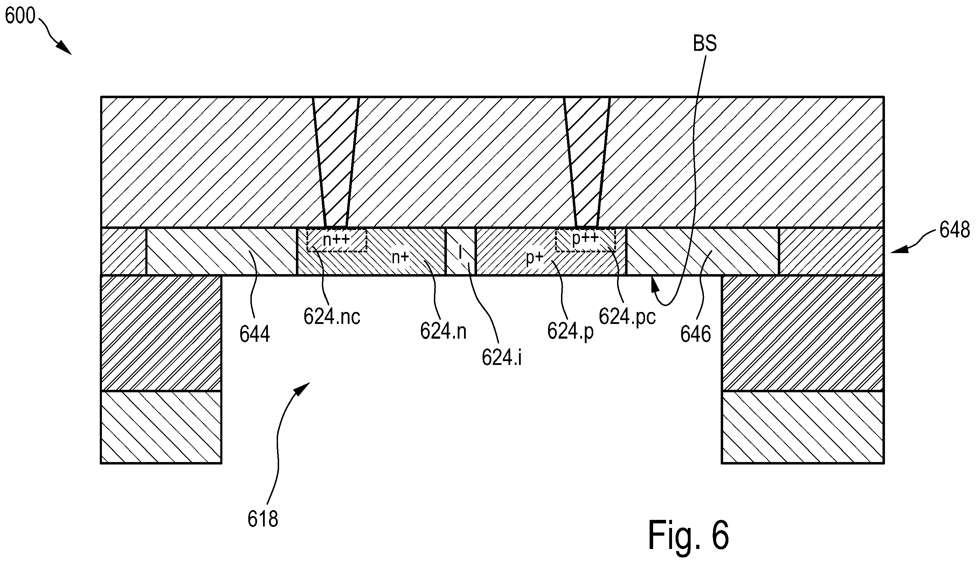

Fig. 6 is an enlarged cross sectional view of an area of another sensor chip 600 comprising a cavity 618 in accordance with another embodiment of the present invention. A monolithically integrated lateral photodiode 624 comprises a lateral n⁺-i-p⁺-layer sequence of active photodiode layers 624n. 624.i, and 624p, respectively, which lateral layer sequence forms an integral part of the exposed back surface BS and as such defines a photosensor surface, which is laterally embedded between insulating material regions 644 and 646 in a photonic plane 648. Thus, the present embodiment uses a p-i-n diode 624 as the lateral photodiode, with an additional intrinsically conductive layer 624.i between the p⁺- and n⁺-doped layers 624.p and 624.n. Exemplary ranges of suitable doping levels of the p⁺- and n⁺-doped layers 624.p and 624.n of the n⁺-i-p⁺-layer sequence are as discussed with reference to the embodiment of Fig. 5. As in that embodiment, too, particularly high doping levels are provided in the n⁺⁺ contact region 624.nc and the p⁺⁺ contact region 624.pc.

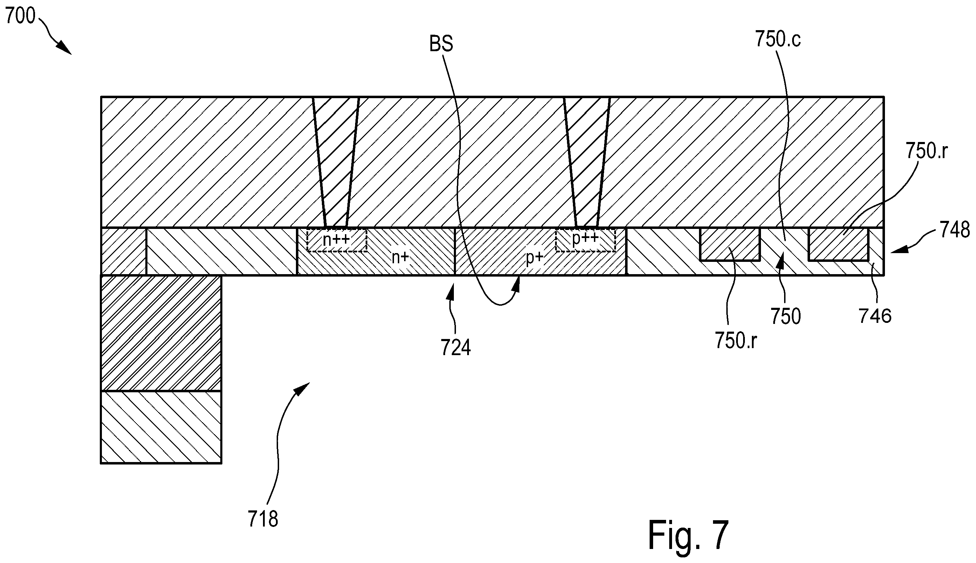

Fig. 7 is an enlarged cross sectional view of an area of a sensor chip 700 comprising a cavity 718 in accordance with another embodiment of the present invention. The sensor chip 700 resembles the sensor chip 500 of Fig. 5, but has a laterally larger cavity 718 which additionally comprises a straight waveguide 750 arranged in a photonic plane of silicon 748, for guiding an optical input wave to the active-surface element and for guiding an optical output wave from the active-surface element to a photonic detector (not shown), which is configured to generate an output signal in response to receiving the optical output wave. An example of a second photonic sensor element is a silicon photonic micro-ring resonator (MRR). Reference is made to the functional description in a previous section of this specification. In the present example, the waveguide 750 comprises a core 750.c of an insulating material such as SiO₂, which is embedded between lateral rails 750.r made of silicon, which may be n-doped. However, this is a non-limiting example and other waveguide structures may be used. In comparison with the sensor chips of Figs. 5 and 6, the cavity 718 has a lateral extension that also exposes that part of the insulating material region 746, in which the optical waveguide 750 is embedded. This part of the insulating material region 746 on back surface BS in the cavity 718 is also covered with the functionalized coating (not shown).

In operation, an optical input wave is guided to the functional coating (not shown) on the back surface BS of the cavity 718. The optical input wave, when exposed to particles to be sensed, which have been captured by the functionalized coating on the active surface element, turns into a resulting optical output wave that carries phase information indicative of an interaction between the optical input wave and the captured particles to be sensed. The photonic detector is configured to extract the phase information from the optical output wave and to provide a photonic detector output signal indicative of the presence of captured particles to be sensed.

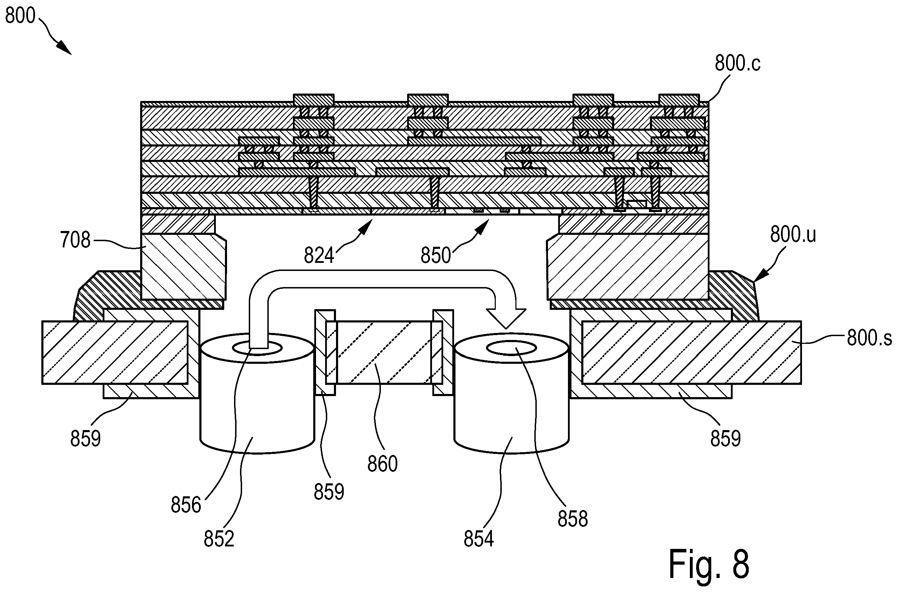

Fig. 8 is a schematic cross sectional view of an embodiment of a sensor chip assembly 800 for chip-Integrated luminescence detection for chemical, biological or biochemical sensing. The sensor chip assembly 800 has a sealing substrate 800.s that is opaque for the excitation light, except in the region of an optical window 860 that is transparent for the excitation light. The sealing substrate 800.s is a printed circuit board (PCB) as used in the semiconductor industry in semiconductor device packages. A sensor chip 800.c similar to that shown in Fig. 1 is mounted by the bulk silicon (708) on the sealing substrate 800.s. In contrast to the embodiment of Fig. 1, the substrate layer (106, cf. Fig. 1) may be completely removed from the sensor chip 800.c. The sensor chip 800.c is mounted on the sealing substrate 800.s using an underfill 800.u. An inlet plug 852 with an inlet opening 856 and an outlet plug 854 with an outlet opening 858 are mounted in the substrate 800.s to allow controlling the flow of fluid to the cavity. A suitable diameter of the inlet and outlet openings is in the range between 200 and 500 µm, and in one example amounts to 360 µm. A protective bioinert coating 859 may be used to cover the sealing substrate and protect the sample solution from direct exposure to the substrate. The coating may be made of copper, or gold, or made of copper with an electroless Ni / Pd / Au plating (ENEPIG).

Figs 9 to 11 show an exemplary assay with the hybrid sensor. In Figs. 9 and 10, a cross-section of the sensor chip 900, 1000 within the cavity is shown. Here the photonic plane 960, 1060 bellow a back end of line 904, 1004 with waveguides 924, 1024 and a photodiode or avalanche photo diode 926, 1026 is pictured. The surface of the photonic plane 960,1060 is coated with covalent attached binders 962, 1062 like fragments of antibodies, for example Fab, Fab2, or scFv fragments; Immunglobulin-G (IgG); a molecularly imprinted polymer (MIP); a peptide; DNA; an aptamere; and/or an affinity protein, such as Protein A, Protein G, Avidin or any of its derivates.

The following description will refer to the example of binder antibodies. The binder antibodies of the surface functionalization layer are selected to allow capturing the particles that are to be sensed.

In Fig. 10 a second step of a possible assay is shown where an analyte L, e.g. a virus, is captured by the antibodies 1062 which are coated on the optical waveguides 1024 and the lateral photo or avalanche diode 1026 on the back end of line 1004. An initial shift in the refractive index due to the immobilization of the analyte L is detected by the photonic waveguide structures (indicated as an increase in detected light intensity I MRR in Fig 12, during the phase II).

In Fig. 11, a third step of a possible assay is shown were a labelled detection particle V is added. The detection particle consists of a binder label combination e.g., antibody coated quantum nanodots, Eu³⁺-Chelate labelled antibodies or enzyme-antibody conjugates. The binders on the detection particles V also bind the analyte L),but must not be identical to the binders 962 used in the example of Fig. 9. Due to the additional binding of the detection particles V an additional shift of the local refractive index of the photonic sensor structures can be detected (cf. Fig. 12, phase III). As the label of the detection particle V has light emitting feature properties an additional signal is recorded by the photo diode (Fig. 12, phase III, I APD).

The label detection particles V)are selected to exhibit a particularly strong emission of characteristic light in response to suitable excitation, such as chemical or optical excitation, making their light emission easier to detect by the integrated lateral photodiode than the light emission of many types of particles to be sensed alone, i.e., without use of the label particles L. Exemplary detection particles V are oxidative enzymes that produce the characteristic light in the form of bioluminescence in response to chemical excitation. This applies in particular to the class of luciferases. The peak emission wavelength for luciferases varies depending on the type of luciferase and the substrate used. For example, the peak emission wavelength for firefly luciferase is 560nm. However, other luciferases have emission spectra covering other areas of the electromagnetic spectrum. For instance, the luciferase known under the tradename NanoLuc^{®} has a peak emission wavelength at 460 nm.

Fig. 12 is a diagram with a schematic illustration of signal amplitudes (vertical scales, left and right, in arbitrary units) over time (horizontal scale, in arbitrary units), as provided and detected on-chip in a sensor chip embodiment according to Fig. 7 or 8, using a silicon photonic micro-ring resonator (MRR) (left vertical scale) and a lateral avalanche photodiode (APD, right vertical scale). The horizontal scale distinguishes three different time spans indicated by Roman numbers I, II, and III. The time spans are only used for explanatory purposes and may or may not correspond to the signals received in an actual measurement scenario. In the first time span I, the functionalized coating 960 is provided and has only the binder antibodies 962, corresponding to the situation illustrated in Fig. 9. In this time span I, the sensor chip will detect zero signal (or, in the presence of excitation light, no significant signal) from both the MRR and from the lateral avalanche photodiode APD. In the second time span II, the functionalized coating corresponds to the situation shown in Fig. 10, in which the functionalized coating 1060 is provided with analyte particles (L). In this situation, the MRR will detect a shift in the local refractive index which will create a significant change in MRR signal intensity, whereas the APD will detect no significant light emission. It is only in the time span III, after the addition of an amplifier, the detection particles (V), that corresponds to the situation illustrated in Fig. 11, in which one or more particles to be sensed have been captured and immobilized at the analyte particles that a significant light emission is detected by the APD. The APD signal that is indicative of this detection of one or more particles to be sensed is accompanied by an increase of the signal intensity received from the MRR in comparison with the intensity in time span II, because of an additional local refractive index change shift created by the captured particle(s). Thus, the APD signal provides helpful information on the detection of the particles to be sensed, independently from the refractive index, which removes potential ambiguity from the MRR signal. It is noted that in order to detect the presence/capturing of particles to be sensed, the APD signal could also be used alone, without the addition of an MRR.

In summary, a sensor chip for detecting a presence of chemical, biochemical or biological particles to be sensed in an analyte fluid comprises at least one cavity extending from the back side of an SOI substrate through its base and buried oxide layers to expose a back surface of the silicon layer. At least one monolithically integrated lateral photodiode comprises a lateral layer sequence of active photodiode layers, forming an integral part of the exposed back surface defining a photosensor surface. A functionalized coating either comprises a capturing agent, a preloaded capturing agent with labelled analyte combination or is configured to immobilize a capturing agent upon exposure of the surface functionalization layer to the capturing agent, for selectively capturing the particles to be sensed from an analyte fluid upon exposure of the functionalization layer to the analyte fluid. The photodiode is sensitive to detect, upon capture of one or more of the particles to be sensed by the capturing agent, a characteristic light emission or a characteristic change in light emission from the surface functionalization layer in response to supplied excitation energy.

## Claims

1. A sensor chip for detecting a presence of chemical, biochemical or biological particles to be sensed in an analyte fluid, the sensor chip comprising
- a silicon-on-insulator substrate, herein SOI substrate, that has a front side and a back side and that comprises a silicon layer forming the front side, a base layer forming the back side and a buried oxide layer between the silicon layer and the base layer;
- at least one cavity extending from the back side through the base layer and through the buried oxide layer and exposing a back surface of the silicon layer;
- at least one monolithically integrated lateral photodiode that comprises a lateral layer sequence of active photodiode layers, which lateral layer sequence forms an integral part of the exposed back surface and as such defines a photosensor surface; and
- a functionalized coating that has at least one surface functionalization layer on the photosensor surface and either comprises a capturing agent or is configured to immobilize a capturing agent upon exposure of the surface functionalization layer to the capturing agent, for selectively capturing the particles to be sensed from an analyte fluid upon exposure of the functionalization layer to the analyte fluid; wherein
- the photodiode is sensitive to detect, upon capture of one or more of the particles to be sensed by the capturing agent, a characteristic light emission or a characteristic change in light emission from the surface functionalization layer in response to supplied excitation energy, wherein the characteristic light has a wavelength that is indicative of the presence of the particle to be sensed, and to provide a photodiode output signal indicative thereof.

2. The sensor chip of claim 1, wherein the lateral layer sequence of active photodiode layer is a P-N layer sequence, or a P-I-N layer sequence, wherein P denotes a p-doped semiconductor layer, N denotes an n-doped semiconductor layer, and I denotes an intrinsically conductive semiconductor layer.

3. The sensor chip of claim 1 or 2, wherein the photodiode is a lateral avalanche photodiode or a lateral single-photon avalanche photodiode.

4. The sensor chip of claim 1, wherein the photodiode is sensitive to detect the characteristic light emitted directly by the particles to be sensed or emitted by label particles that are suitably selected to be coupled to only the captured particles to be sensed and configured to emit the characteristic light in response to the supplied excitation energy.

5. The sensor chip of claim 1 or 2, further comprising
- a monolithically integrated excitation light emitter arranged to emit excitation light for providing the excitation energy, or
- a monolithically integrated waveguide structure that is arranged and configured to receive excitation light from an external excitation light emitter and to guide the excitation light towards the surface functionalization layer.

6. The sensor chip of any of the preceding claims, further comprising a sealing substrate attached to the SOI substrate on its back side, the sealing substrate having a fluid, i.e., liquid or gas access port that is in fluidic connection with the cavity through the sealing substrate, to allow supplying the analyte fluid to the cavity through the fluid access port and the sealing substrate.

7. The sensor chip of claim 6, wherein the sealing substrate comprises an excitation light emitter for providing the excitation light to the surface functionalization layer through the sealing substrate.

8. The sensor chip of claim 6 or 7, wherein the sealing substrate is made of a material that is transparent for the excitation light.

9. The sensor chip of claim 6 or 7, wherein the sealing substrate is made of a material that is not transparent for the excitation light, and wherein the sealing substrate comprises an optical input port for receiving excitation light supplied by a light source that is external to the sensor chip.

10. The sensor chip of any of the claims 7 to 9, wherein the sealing substrate comprises a light propagation structure allowing propagation of the excitation light to the surface functionalization layer.

11. The sensor chip of any of the claims 6 to 10, wherein the sealing substrate is sealing substrate is made of a metallic, ceramic, or polymeric material, or of a fiber-polymer composite material.

12. The sensor chip of any of the preceding claims, wherein the surface functionalization layer comprises a capturing agent comprising antibodies, fragments of antibodies, DNA, a peptide, an aptamere, or an affinity protein

13. The sensor chip of any of the preceding claims, wherein the surface functionalization layer comprises a chemical amplifier material

14. The sensor of any of the preceding claims, further comprising a second photonic sensor element including
- an active-surface element arranged on the exposed back surface of the silicon layer in the cavity and having the functionalized coating;
- a waveguide arranged in a photonic plane for guiding an optical input wave to the active-surface element and for guiding an optical output wave from the active-surface element to a photonic sensor element, which is configured to generate an output signal in response to receiving the optical output wave; wherein
- the second photonic sensor element is configured to expose the optical input wave to particles to be sensed and captured by the functionalized coating on the active surface element, and to provide the resulting optical output wave with phase information indicative of an interaction between the optical input wave and the captured particles to be sensed; wherein
- the photonic detector is configured to extract the phase information from the optical output wave and to provide a photonic detector output signal indicative of the presence of captured particles to be sensed.

15. A method for operating a sensor chip according to any of the preceding claims, comprising:
- providing a sensor chip according to any of the preceding claims;
- exposing the surface functionalization layer of the sensor chip that comprises immobilized binder molecules to an analyte fluid comprising particles to be sensed;
- supplying excitation energy to the functionalization layer;
- detecting characteristic light emitted from the surface functionalization layer in response to supplied excitation energy, wherein the characteristic light has a wavelength that is indicative of the presence of the particle to be sensed.

## Patentansprüche

1. Sensorchip zum Nachweis einer Anwesenheit chemischer, biochemischer oder biologischer, in einem Analytfluid zu erkennender Partikel, wobei der Sensorchip umfasst
- ein Silizium-auf-Isolator-Substrat, hier ein SOI-Substrat, das eine Vorderseite und eine Rückseite aufweist und eine die Vorderseite bildende Siliziumschicht, eine die Rückseite bildende Basisschicht und eine zwischen der Siliziumschicht und der Basisschicht vergrabene Oxidschicht umfasst;
- mindestens einen Hohlraum, der sich von der Rückseite durch die Basisschicht und durch die vergrabene Oxidschicht erstreckt und eine rückwärtige Oberfläche der Siliziumschicht freilegt;
- mindestens eine monolithisch integrierte laterale Photodiode, die eine laterale Schichtsequenz von aktiven Photodiodenschichten umfasst, welche laterale Schichtsequenz einen integralen Bestandteil der freigelegten rückwärtigen Fläche bildet und als solche eine Photosensoroberfläche definiert; und
- eine funktionalisierte Beschichtung, die mindestens eine Oberflächenfunktionalisierungsschicht auf der Photosensoroberfläche aufweist und entweder ein Einfangmittel umfasst oder konfiguriert ist, ein Einfangmittel auf ein Aussetzen der Oberflächenfunktionalisierungsschicht dem Einfangmittel zu immobilisieren, um die zu erkennenden Partikel aus einem Analytfluid auf ein Aussetzen der Funktionalisierungsschicht dem Analytfluid selektiv einzufangen; wobei
- die Photodiode empfindlich ist, um auf ein Einfangen eines oder mehrerer der zu erkennenden Partikel durch das Einfangmittel eine charakteristische Lichtemission oder eine charakteristische Änderung einer Lichtemission von der Oberflächenfunktionalisierungsschicht als Reaktion auf zugeführte Anregungsenergie nachzuweisen, wobei das charakteristische Licht eine Wellenlänge aufweist, die auf das Vorhandensein des zu erkennenden Partikels hinweist, und um ein dies anzeigendes Photodiodenausgangssignal bereitzustellen.

2. Sensorchip nach Anspruch 1, wobei die laterale Schichtsequenz der aktiven Photodiodenschicht eine P-N-Schichtsequenz oder eine P-I-N-Schichtsequenz ist, wobei P eine p-dotierte Halbleiterschicht, N eine n-dotierte Halbleiterschicht und I eine intrinsisch leitfähige Halbleiterschicht bezeichnet.

3. Sensorchip nach Anspruch 1 oder 2, wobei die Photodiode eine laterale Avalanche-Photodiode oder eine laterale Einzelphotonen-Avalanche-Photodiode ist.

4. Sensorchip nach Anspruch 1, wobei die Photodiode empfindlich ist, um das charakteristische Licht nachzuweisen, das direkt von den zu erkennenden Partikeln emittiert wird oder von Markierungspartikeln emittiert wird, die geeignet ausgewählt sind, nur mit den eingefangenen, zu erkennenden und zum Emittieren des charakteristischen Lichts als Reaktion auf die zugeführte Anregungsenergie konfigurierten Partikeln gekoppelt zu werden.

5. Sensorchip nach Anspruch 1 oder 2, ferner umfassend
- einen monolithisch integrierten Anregungslichtemitter, der angeordnet ist, Anregungslicht zur Bereitstellung der Anregungsenergie zu emittieren, oder
- eine monolithisch integrierte Wellenleiterstruktur, die zum Empfangen von Anregungslicht von einem externen Anregungslichtemitter und zum Leiten des Anregungslichts zur Oberflächenfunktionalisierungsschicht angeordnet und konfiguriert ist.

6. Sensorchip nach einem der vorstehenden Ansprüche, ferner umfassend ein an dem SOl-Substrat an dessen Rückseite angebrachtes Dichtungssubstrat, wobei das Dichtungssubstrat einen Fluidzugangsanschluss, d. h. einen Flüssigkeits- oder Gaszugangsanschluss, aufweist, der über das Dichtungssubstrat in Fluidverbindung mit dem Hohlraum steht, um ein Zuführen des Analytfluids zu dem Hohlraum durch den Fluidzugangsanschluss und das Dichtungssubstrat zu ermöglichen.

7. Sensorchip nach Anspruch 6, wobei das Dichtungssubstrat einen Anregungslichtemitter umfasst, um das Anregungslicht durch das Dichtungssubstrat an die Oberflächenfunktionalisierungsschicht zu liefern.

8. Sensorchip nach Anspruch 6 oder 7, wobei das Dichtungssubstrat von einem Material gebildet wird, das für das Anregungslicht transparent ist.

9. Sensorchip nach Anspruch 6 oder 7, wobei das Dichtungssubstrat von einem Material gebildet wird, das für das Anregungslicht nicht transparent ist, und wobei das Dichtungssubstrat einen optischen Eingangsanschluss zum Empfangen von Anregungslicht umfasst, das von einer außerhalb des Sensorchips befindlichen Lichtquelle geliefert wird.

10. Sensorchip nach einem der Ansprüche 7 bis 9, wobei das Dichtungssubstrat eine Lichtfortpflanzungsstruktur umfasst, die eine Fortpflanzung des Anregungslichts zur Oberflächenfunktionalisierungsschicht ermöglicht.

11. Sensorchip nach einem der Ansprüche 6 bis 10, wobei das Dichtungssubstrat von einem metallischen, keramischen oder polymeren Material oder von einem Faser-Polymer-Verbundmaterial gebildet wird.

12. Sensorchip nach einem der vorstehenden Ansprüche, wobei die Oberflächenfunktionalisierungsschicht ein Einfangmittel umfasst, das Antikörper, Antikörperfragmente, DNA, ein Peptid, ein Aptamer oder ein Affinitätsprotein umfasst.

13. Sensorchip nach einem der vorstehenden Ansprüche, wobei die Oberflächenfunktionalisierungsschicht ein chemisches Verstärkermaterial umfasst.

14. Sensor nach einem der vorstehenden Ansprüche, der ferner ein zweites photonisches Sensorelement umfasst, enthaltend
- ein aktives Oberflächenelement, das auf der freiliegenden Rückseite der Siliziumschicht in dem Hohlraum angeordnet ist und die funktionalisierte Beschichtung aufweist;
- einen in einer photonischen Ebene zum Leiten einer optischen Eingangswelle zu dem Element mit aktiver Oberfläche und zum Leiten einer optischen Ausgangswelle von dem Element mit aktiver Oberfläche zu einem photonischen Sensorelement angeordneten Wellenleiter, welches photonische Sensorelement konfiguriert ist, als Reaktion auf ein Empfangen der optischen Ausgangswelle ein Ausgangssignal zu erzeugen; wobei
- das zweite photonische Sensorelement konfiguriert ist, die optische Eingangswelle zu erkennenden und von der funktionalisierten Beschichtung auf dem Element mit aktiver Oberfläche einzufangenden Partikeln auszusetzen und der resultierenden optischen Ausgangswelle eine Phaseninformation bereitzustellen, die eine Wechselwirkung zwischen der optischen Eingangswelle und den eingefangenen, zu erkennenden Partikeln anzeigt; wobei
- der photonische Detektor konfiguriert ist, die Phaseninformation von der optischen Ausgangswelle zu extrahieren und ein photonisches Detektorausgangssignal, das das Vorhandensein von eingefangenen, zu erkennenden Partikeln anzeigt, bereitzustellen.

15. Verfahren zum Betreiben eines Sensorchips gemäß einem der vorstehenden Ansprüche, umfassend:
- Bereitstellen eines Sensorchips gemäß einem der vorstehenden Ansprüche;
- Aussetzen der Oberflächenfunktionalisierungsschicht des Sensorchips, die immobilisierte Bindemoleküle umfasst, einem Analytfluid, das zu erkennende Partikel umfasst;
- Zuführen von Anregungsenergie zu der Funktionalisierungsschicht;
- Nachweisen von charakteristischem Licht, das von der Oberflächenfunktionalisierungsschicht als Reaktion auf die zugeführte Anregungsenergie emittiert wird, wobei das charakteristische Licht eine Wellenlänge aufweist, die das Vorhandensein der zu erkennenden Partikel anzeigt.

## Revendications

1. Une puce formant capteur pour détecter la présence de particules chimiques, biochimiques ou biologiques à détecter dans un fluide d'analyte, la puce formant capteur comprenant :
- un substrat silicium sur isolant, ici un substrat SOI, qui présente une face avant et une face arrière et qui comprend une couche de silicium formant la face avant, une couche de base formant la face arrière et une couche d'oxyde enterrée entre la couche de silicium et la couche de base ;
- au moins une cavité s'étendant depuis la face arrière à travers la couche de base et à travers la couche d'oxyde enterrée et exposant une surface arrière de la couche de silicium ;
- au moins une photodiode latérale intégrée monolithiquement qui comprend une séquence de couches latérales de couches de photodiodes actives, laquelle séquence de couches latérales fait partie intégrante de la surface arrière exposée et définit en tant que telle une surface photosensible ; et
- un revêtement fonctionnalisé qui a au moins une couche de fonctionnalisation de surface sur la surface photosensible et comprend un agent de capture ou est configuré pour immobiliser un agent de capture lors de l'exposition de la couche de fonctionnalisation de surface à l'agent de capture, pour capturer sélectivement les particules à détecter à partir d'un fluide d'analyte lors de l'exposition de la couche de fonctionnalisation au fluide d'analyte ; dans lequel :
- la photodiode est sensible pour détecter, lors de la capture d'une ou plusieurs des particules à détecter par l'agent de capture, une émission de lumière caractéristique ou un changement caractéristique d'émission de lumière de la couche de fonctionnalisation de surface en réponse à l'énergie d'excitation fournie, dans laquelle la lumière caractéristique a une longueur d'onde qui est indicative de la présence de la particule à détecter, et pour fournir un signal de sortie de photodiode indicatif de celle-ci.

2. La puce formant capteur de la revendication 1, dans laquelle la séquence de couches latérales de la couche de photodiode active est une séquence de couches P-N, ou une séquence de couches P-I-N, dans laquelle P désigne une couche semi-conductrice dopée p, N désigne une couche semi-conductrice dopée n, et I désigne une couche semi-conductrice intrinsèquement conductrice.

3. La puce formant capteur selon la revendication 1 ou 2, dans laquelle la photodiode est une photodiode à avalanche latérale ou une photodiode à avalanche à photon unique latérale.

4. La puce formant capteur de la revendication 1, dans laquelle la photodiode est sensible pour détecter la lumière caractéristique émise directement par les particules à détecter ou émise par des particules de marquage qui sont sélectionnées de manière appropriée pour être couplées uniquement aux particules capturées à détecter et configurées pour émettre la lumière caractéristique en réponse à l'énergie d'excitation fournie.

5. La puce formant capteur selon la revendication 1 ou 2, comprenant en outre :
- un émetteur de lumière d'excitation intégré monolithiquement, conçu pour émettre une lumière d'excitation afin de fournir l'énergie d'excitation, ou
- une structure de guide d'onde intégrée monolithiquement qui est agencée et configurée pour recevoir la lumière d'excitation d'un émetteur de lumière d'excitation externe et pour guider la lumière d'excitation vers la couche de fonctionnalisation de surface.

6. La puce formant capteur selon l'une quelconque des revendications précédentes, comprenant en outre un substrat d'étanchéité fixé au substrat SOI sur sa face arrière, le substrat d'étanchéité ayant un orifice d'accès de fluide, c'est-à-dire d'un de liquide ou de gaz qui est en connexion fluidique avec la cavité à travers le substrat d'étanchéité, pour permettre de fournir le fluide d'analyte à la cavité à travers l'orifice d'accès de fluide et le substrat d'étanchéité.

7. La puce formant capteur selon la revendication 6, dans laquelle le substrat d'étanchéité comprend un émetteur de lumière d'excitation pour fournir la lumière d'excitation à la couche de fonctionnalisation de surface à travers le substrat d'étanchéité.

8. La puce formant capteur selon la revendication 6 ou 7, dans laquelle le substrat d'étanchéité est constitué d'un matériau qui est transparent pour la lumière d'excitation.

9. La puce formant capteur selon la revendication 6 ou 7, dans laquelle le substrat d'étanchéité est constitué d'un matériau qui n'est pas transparent à la lumière d'excitation, et dans laquelle le substrat d'étanchéité comprend un port d'entrée optique pour recevoir la lumière d'excitation fournie par une source lumineuse externe à la puce formant capteur.

10. La puce formant capteur selon l'une quelconque des revendications 7 à 9, dans laquelle le substrat d'étanchéité comprend une structure de propagation de la lumière permettant la propagation de la lumière d'excitation vers la couche de fonctionnalisation de surface.

11. La puce formant capteur selon l'une quelconque des revendications 6 à 10, dans laquelle le substrat d'étanchéité est un substrat d'étanchéité constitué d'un matériau métallique, céramique ou polymère, ou d'un matériau composite fibre-polymère.

12. La puce formant capteur selon l'une quelconque des revendications précédentes, dans laquelle la couche de fonctionnalisation de surface comprend un agent de capture comprenant des anticorps, des fragments d'anticorps, de l'ADN, un peptide, un aptamère ou une protéine d'affinité.

13. La puce formant capteur de l'une quelconque des revendications précédentes, dans laquelle la couche de fonctionnalisation de surface comprend un matériau amplificateur chimique.

14. Capteur selon l'une quelconque des revendications précédentes, comprenant en outre un deuxième élément formant capteur photonique comprenant :
- un élément à surface active disposé sur la surface arrière exposée de la couche de silicium dans la cavité et comportant le revêtement fonctionnalisé ;
- un guide d'onde disposé dans un plan photonique pour guider une onde d'entrée optique vers l'élément de surface active et pour guider une onde de sortie optique de l'élément de surface active vers un élément formant capteur photonique, qui est configuré pour générer un signal de sortie en réponse à la réception de l'onde de sortie optique ; dans lequel
- le deuxième élément formant capteur photonique est configuré pour exposer l'onde d'entrée optique à des particules à détecter et à capturer par le revêtement fonctionnalisé sur l'élément de surface active, et pour fournir à l'onde de sortie optique résultante des informations de phase indiquant une interaction entre l'onde d'entrée optique et les particules capturées à détecter ; dans lequel ;
- le détecteur photonique est configuré pour extraire les informations de phase de l'onde de sortie optique et pour fournir un signal de sortie de détecteur photonique indiquant la présence de particules capturées à détecter.

15. Procédé pour faire fonctionner une puce formant capteur selon l'une quelconque des revendications précédentes, comprenant les étapes consistant à :
- fournir une puce formant capteur selon l'une quelconque des revendications précédentes ;
- exposer la couche de fonctionnalisation de surface de la puce formant capteur qui comprend des molécules de liant immobilisées à un fluide d'analyte comprenant des particules à détecter ;
- fournir de l'énergie d'excitation à la couche de fonctionnalisation ;
- détecter la lumière caractéristique émise par la couche de fonctionnalisation de surface en réponse à l'énergie d'excitation fournie, dans laquelle la lumière caractéristique a une longueur d'onde qui indique la présence de la particule à détecter.
